# EUROPEAN PATENT APPLICATION

(11) **EP 1 652 427 A1**
(43) Date of publication of application: **03.05.2006**
(21) Application number: 05110233.3
(22) Date of filing: 01.11.2005
(51) Int. Cl.: A01K 91/18

(54) **Line drawer**

(30) Priority: 01.11.2004 NO 20044724
(71) Applicant: Rapp Hydema Syd AS, 1620 Gressvik (NO)
(72) Inventor: MATHISEN, Öivind, 1678, Kråkeröy (NO); SOLGÅRD LARSEN, Solbjörg, 1621, Gressvik (NO); SCOTT GUNNDERSEN, Einar, 1621, Gressvik (NO)
(74) Representative: Hellbom, Lars Olof

(57) **Abstract**

A line drawer is described for lines with fishing hooks, where the line drawer comprises a pair of rotating rollers (1, 9) mounted on a tubular support (14) and where a strip of a smooth material (5) runs between the rollers (1, 9) for capturing of the fish line between the coils of the strip (5) on one of the rollers (1, 9), where one of the rollers (1) is furnished with a stopping mechanism (4) for rotation of the roller and where the other roller (9) is furnished with an automatic pulling mechanism for the strip (5).

## Description

The present invention relates to a device for drawing of a fishing line from a vessel. It is an objective, when the line is being drawn out of the sea, to prevent the hooks from being caught up by each other, in the equipment, line or crew.

From NO patent 92763, is it known a device for pulling and setting of a line from a fishing vessel where the hooks are baited by leading the line through a bait receptacle for automatic baiting of the line. In addition, the apparatus uses a band which is wound up on a roller from a band supply, where the line with the hooks are placed between the band coils to keep the hooks separated from each other.

However, such a formerly known fishing line drawer is not adapted to the current demands for safety and efficiency and it therefore exists a need for a modern fishing line drawer which satisfies the current demands for economy, efficiency and safety on board.

Based on this, a line drawer according to the invention has been developed. An embodiment of such a line drawer is shown in the following figures where:

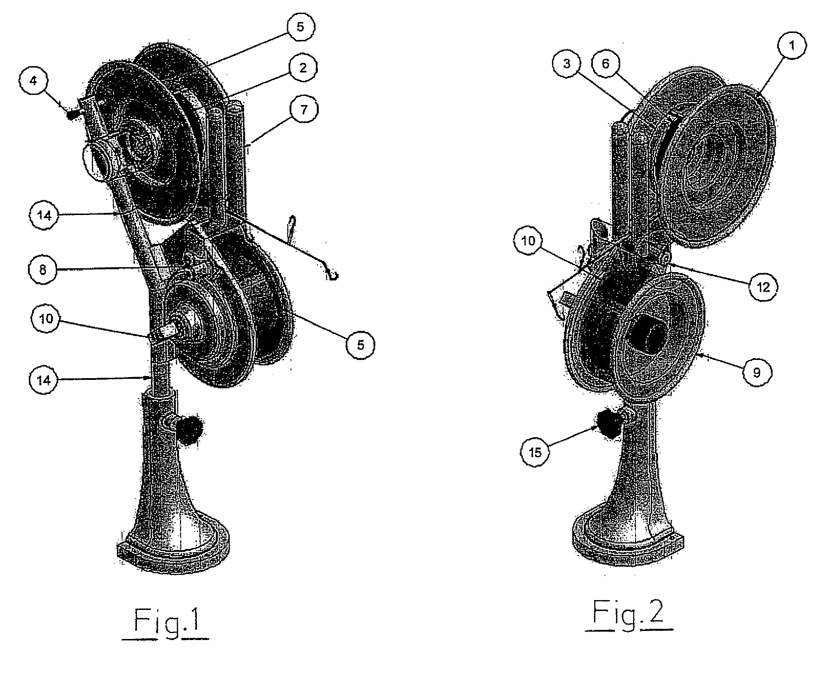

Fig. 1-3 shows a line drawer according to the invention observed from three angles.
Fig. 4 shows a detailed view of a stopping device for the line drawer.
Fig, 5 shows a detailed view of a guiding device for the band in the line drawer.
Fig. 6 shows a detailed view of a leading hoop for the fishing line with hooks which is lead be means of the line drawer.

The invention will now be explained more detailed with reference to the figures.

The line drawer according to the invention is formed by a stand carrying a tubular support 14 forming a frame on which it is arranged two rotating rollers, an upper roller 1 and a lower roller 9. The rollers 1, 9 preferably rotates with their axles perpendicular on the tubular support 14. A band such as a strip made of plastic, rubber or aluminium run between the rollers 1, 9. The band is sufficiently wide to cover the hooks normally used with a fishing line. The band 5 runs between the rollers 1, 9 in such a way that it is coiled from one roller and up on the other, as the rollers 1, 9 are rotated. To obtain this, the band 5 must run in such a way that the rollers 1, 9 rotate in opposite directions of each others, when the band 5 is being coiled.

The material of the band can be chosen based on a skilled persons knowledge, but it is necessary that it is made in a smooth material so that hooks or bait will not attach to it. A smooth, flexible material, preferably plastic is therefore preferred.

The length of the band may also be chosen by the skilled person, but it has at least a length corresponding to the length of the hook containing part of the fish line used for the fishing, restricted upwards by the number of rotations the lower roller 9 can perform before it stops. The number of rotations of the lower roller 9 is again limited by the number of barrel springs arranged in the roller, as far as the rollers are supplied with such springs.

By coiling of a fish line, the line extension (possibly with accompanying sinker) will be placed at the inlet of the band 5 on the roller for receiving of line and band. This roller is preferably the lower roller 1 in the apparatus but it is also possible to interchange which of the rollers that are used as inlet roller.

Between the rollers 1, 9, is it preferably arranged a guiding device 7, in the shown embodiment formed as a guiding fork or cradle, for guiding of line/hooks so that these run centrally on the band 5 and are not protruding from the sides of the band 5 to avoid the hooks from hooking onto the band or inadequate material (rope, clothing, lines etc.). In a preferred embodiment may the guiding fork 7 be hinged in the support 14 or in the bracket for the rollers 1, 9 so that the guiding fork 7 may be rotated away from the inlet area of the band. In this way, the fixing of the fish line to the inlet of the band 5 at the inlet roller 1 can easily be done, on the same time as a possible sinker which can not pass through the teeth of the guiding fork 7, can be let in between the coils of the band 5. After such fixing of the fish line with hooks and sinker is done, is it possible to rotate the guiding fork back into position for guiding of the fish line and hooks in a proper manner between the coils of the band 5, as explained above.

The guiding fork 7 can be locked in the proper position for guiding of fish line and hooks by means of a lock such as a bayonet locking or a ball catch.

One of the rollers 1, 9 can also be furnished with a pull-back spring (not shown) acting on the shaft of the roller in question (or on the roller itself). The other roller is preferably furnished with an in- *and out-winding device* (a handle or preferably a motor). By rotation of one of the rollers 1, 9, is the pull-back spring tightened, so that the opposite movement can be performed by switching off the motor so that the pull-back spring will operate the coiling on or off the band 5 (and fish line). To lock the rollers 1, 9, is at least one of the rollers provided with a lock such as a locking pin 4 or an other locking arrangement.

Such a locking pin 4 may be attached to one of the nonrotating parts of the line drawer, for example the tubular support 14 or to a cover for the rollers (not shown) if such is present. The locking pin 4 can be arranged in locking position for the respective roller by means of cooperating holes in the relevant rotating roller section.

In the shown embodiment of the line drawer according to the present invention, is the upper roller 1 de-escalating with a slit 2 in the centre leaving space for the line, in addition to rests 3 for bands such as a plastic band 5. The upper roller 1 is provided with a mechanical stopping device 4 comprising a pin which is able to cooperate with corresponding holes in the upper roller 1, as shown in fig. 4. The pin 4 can be spring-loaded so that it is kept stuck in the cooperating holes in the upper roller 1, and may moreover be locked in free position (i.e. without being pressed into the holes in the upper roller 1) for example by turning it to free position via a release mechanism which may be arranged in the tubular support 14. The stopper/pin 4 prevent the pull-back spring on the lower roller 9 from pulling out the plastic strip 5 and thereby the fish line in parked position.

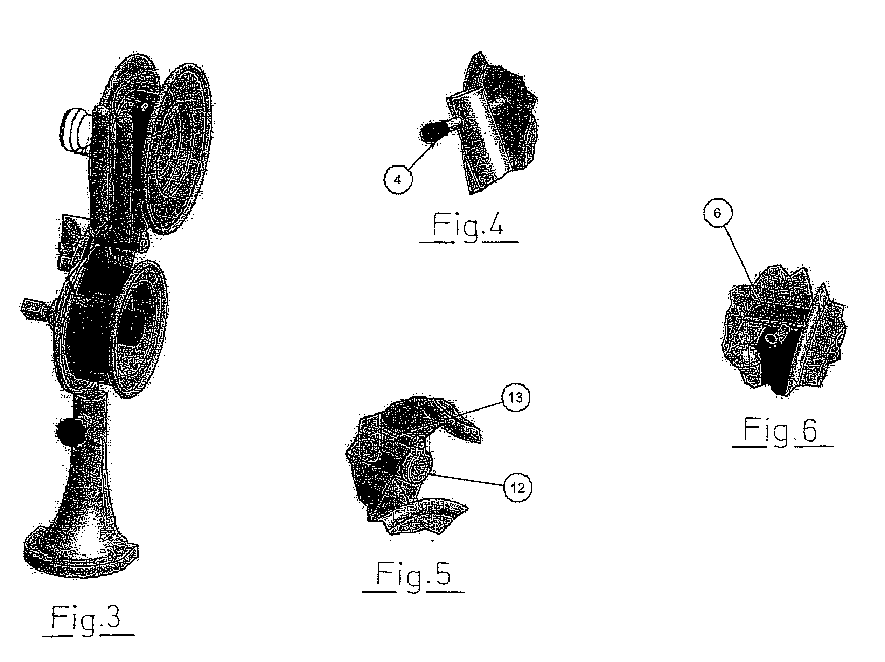

As can be seen on fig. 6, is the plastic band 5 in a preferred embodiment mounted with a spring- or rubber-damped leading hoop 6 which the fish line is passing through and which pulls the plastic strip 5 along around the upper roller 1 when the line with hooks is transported to this.

A guiding fork 7 guiding the line with the hooks into the upper roller 1 is preferably mounted on the line drawer apparatus according to the invention. The guiding fork 7 is advantageously pivotally attached with a bayonet joint or a ball catch, in such a way that it easily can be slid away to manipulate/repair the plastic band in an easy manner, if hooks get attached in it or due to other incidents which requires access to the plastic band (wedging, cleaning etc.).

The lower roller 9 is preferably provided with a return mechanism for withdrawal of the plastic strip 5. Such a return mechanism may be a spring-weighted pull-back (se above) or it can be a hydraulic and/or electric pull-back.

The line drawer apparatus according to the invention is preferably provided with a adjustable end strap 10 arranged on the plastic strip 5. Manipulating of the end strap 10 can be done by means of the roller 9. The end strap 10 is in the shown embodiment, arranged at the end of the bearing axle for the roll of plastic strip 5 and is adjusted on the roller side.

As shown in fig. 5, can the plastic strip 5 be kept in start position by a roll arranged under the plastic band 5, and also by means of to stoppers 13 which are present on each side of the band/plastic strip 5.

In the shown embodiment is the line drawer carried by a tubular support 14. The support 14 (and thereby the line drawer) can be adjusted in their height as well as being rotating sideways by being movable or rotatably attached to a base by means of an attachment screw/fastener wheel 15.

## Claims

1. Line drawer for drawing in/feeding out a fish line comprising a mandrel, preferably in the form of a tubular support (14) on which tubular support (14) there is mounted at least a pair of rotating rollers (1, 9), where a strip of smooth material (5) runs between said rollers (1, 9), where the rotational direction of the two rollers (1, 9) run opposite of each other when the strip (5) is coiled out from one roller for simultaneous coiling onto the other roller for capturing of the fish line between the coils of the strip (5) on one of the rollers(1, 9)
c h a r a c t e r i s e d i n t h a t one of the rollers (1) is provided with a stopping mechanism (4) for rotation of the roller and where one and/or the other roller (9) is equipped with an automatic extracting mechanism for the strip (5).

2. Line drawer according to claim 1,
**characterised in that** the stopping mechanism is formed by a spring-weighted stopping pin (4) which cooperate with holes in one of the rollers (1, 9).

3. Line drawer according to claim 2,
**characterised in that** the stopping pin (4) is spring-weighted and can be locked in a free and/or locking position in relation to the roller the locking pin (4) is affecting.

4. Line drawer according to any of the claims 1-3,
**characterised in that** the fish line is lead to the up-drawing roller (1) through a guiding fork (7) .

5. Line drawer according to claim 2,
**characterised in that** the guiding fork (7) is rotating so that it can be removed from the inlet area of the fish line, and preferably where the guiding fork can be locked in a predefined position, for example by means of a bayonet joint or a ball catch (8) .

6. Line drawer according to any of the previous claims,
**characterised in that** the strip (5) comprises an adjustable end strap (10).

7. Line drawer according to any of the previous claims,
**characterised in that** the tubular support (14) is mounted on a base so that the tubular support (14) can rotate as well as being adjusted in the height in the base.
